# EUROPEAN PATENT APPLICATION

(11) **EP 4 668 510 A1**
(43) Date of publication of application: **24.12.2025**
(21) Application number: 24756274.7
(22) Date of filing: 08.02.2024
(51) Int. Cl.: H02B 1/46, H02B 1/48, H02B 1/56, H02J 7/00

(54) **ENERGY STORAGE APPARATUS**

(30) Priority: 14.02.2023 CN 202320214066 U
(71) Applicant: Atlas Copco (Wuxi) Compressor Co., Ltd., Wuxi, Jiangsu 214028 (CN)
(72) Inventor: TANG, Xiangjie, Wuxi, Jiangsu 214028 (CN)
(74) Representative: Van Minnebruggen, Ewan Benito Agnes
(86) International application number: PCT/CN2024/076854
(87) International publication number: WO 2024/169901

(57) **Abstract**

The present application provides an energy storage apparatus, which belongs to the technical field of electric power energy. The energy storage apparatus includes: a box body (1), which is internally provided with a first isolation compartment (13) and a second isolation compartment (14), the box body being provided with a first air inlet (9) in communication with only the first isolation compartment (13), a second air inlet (10) in communication with only the second isolation compartment (14), and an air outlet (11); a transformer (2) and an energy storage converter (3), wherein one of the transformer (2) and the energy storage converter (3) is arranged in the first isolation compartment (13), and the other is arranged in the second isolation compartment (14); and a heat dissipation assembly, which is configured to introduce external cold air, through the first air inlet (9) and the second air inlet (10), into the corresponding isolation compartments for heat exchange, and to discharge the air through the air outlet (11). The energy storage apparatus can realize independnte heat dissipation of the transformer (2) and the energy storage converter (3), thereby avoiding mutual influence.

## Description

### TECHNICAL FIELD

The present application relates to the technical field of electric power energy, and in particular, to an energy storage apparatus.

### BACKGROUND

Currently, a transformer and an energy storage converter in a conventional containerized energy storage apparatus are designed in a combined manner rather than modular replacement, and heat dissipation is also unified, resulting in mutual interference between the heat generated by the transformer and the energy storage converter, thereby leading to inconvenience in installation, maintenance and operation, as well as an inability to adapt to diverse power requirements.

### SUMMARY

The present applicationaims to at least solve one of the technical problems existing in the prior art. For this purpose, the present applicationprovides an energy storage apparatus.

An energy storage apparatus according to an embodiment of the present applicationincludes:
a box body, internally provided with a first isolation compartment and a second isolation compartment, the box body being provided with a first air inlet communicating only with the first isolation compartment, a second air inlet communicating only with the second isolation compartment, and an air outlet;
a transformer and an energy storage converter, one of the transformer and the energy storage converter being arranged in the first isolation compartment, and the other being arranged in the second isolation compartment; and
a heat dissipation assembly, configured to introduce external cold air through the first air inlet and the second air inlet into the corresponding isolation compartments for heat exchange, and discharge the air through the air outlet.

Further, the interior of the second isolation compartment is divided into a storage bin and an air ventilation area in sequence along a direction of cold air circulation, wherein the storage bin is configured to store the transformer or the energy storage converter, and the first isolation compartment is arranged at the bottom of the air ventilation area.

Further, air permeable structures are provided at two opposite sides of the storage bin respectively, such that cold air entering the second isolation compartment can flow into the storage bin through the air permeable structure on one side of the storage bin for heat exchange, and is then discharged into the air ventilation area through the air permeable structure on the other side of the storage bin.

Further, the heat dissipation assembly includes a first heat dissipator and a second heat dissipator. The first heat dissipator is located at the top of the first isolation compartment, and the first heat dissipator introduces hot air in the first isolation compartment into the air ventilation area, and the second heat dissipator discharges the hot air in the air ventilation area through the air outlet.

Further, the first isolation compartment and the second isolation compartment are independent of each other and not communicated with each other. The heat dissipation assembly includes a first heat dissipator and a second heat dissipator that are respectively arranged in one-to-one correspondence with the first isolation compartment and the second isolation compartment.

Further, the first air inlet is arranged on a first sidewall surface of the box body, the second air inlet is arranged on a third sidewall surface of the box body, and the air outlet is arranged on a second sidewall surface opposite to the third sidewall surface of the box body.

Further, the first isolation compartment is arranged close to the second sidewall surface and communicates with the first air inlet on the first sidewall surface of the box body, and the second isolation compartment is arranged close to the third sidewall surface and communicates with the second air inlet on the third sidewall surface of the box body.

Further, the energy storage apparatus further includes a control cabinet and an output busbar which are arranged in the box body respectively and located outside the first isolation compartment and the second isolation compartment. The first sidewall surface of the box body is provided with an operation port and an output port respectively connected to the control cabinet and the output busbar.

Further, the first sidewall surface of the box body is further provided with a main door, and the operation port and the output port are arranged at two sides of the main door respectively.

Further, the second sidewall surface of the box body is provided with a side door which enables the two isolation compartments to be opened and closed at the same time.

Further, both the transformer and the energy storage converter are modular components and can be detachably arranged in the corresponding isolation compartments.

Compared with the prior art, the embodiment of the present application has the following beneficial effects:
In the energy storage apparatus provided by the present embodiment, the transformer and the energy storage converter are placed in the separate isolation compartments respectively, and the box body is provided with the air inlets which communicate with the two isolation compartments respectively and the air outlet, this enables the transformer and the energy storage converter to dissipate heat independently, not only improving the respective heat dissipation efficiency, but also eliminating the mutual interference between the two during dissipating heat. Meanwhile, respective installation, maintenance and operation of the transformer and the energy storage converter are facilitated.

The additional aspects and advantages of the present application will be partially set forth in the following description, and will partially become apparent from the following description or be understood through the practice of the present application.

### BRIEF DESCRIPTION OF THE DRAWINGS

FIG. 1 is a three-dimensional schematic structural diagram of an energy storage apparatus according to an embodiment of the present application from a first perspective;
FIG. 2 is a three-dimensional schematic structural diagram of the energy storage apparatus according to the embodiment of the present application from a second perspective;
FIG. 3 is a sectional view of the energy storage apparatus according to the embodiment of the present application, in which the direction of arrows represents a wind direction; and
FIG. 4 is a three-dimensional schematic structural diagram of a box body with a side door removed according to an embodiment of the present application, in which the directions of arrows represent wind directions.

Components denoted by the reference numerals in the accompanying drawings are as follows:
1- box body; 2- transformer; 3- energy storage converter; 4- first heat dissipator; 5- second heat dissipator; 6- control cabinet; 7- output busbar; 8- main door; 9- first air inlet; 10- second air inlet; 11- air outlet; 12- side door; 13- first isolation compartment; 14- second isolation compartment; 15- storage bin; 16- air ventilation area.

### DETAILED DESCRIPTION

The embodiments of the present application will be described in detail below, and the examples of the embodiments are illustrated in the accompanying drawings, throughout which identical or similar reference numerals represent identical or similar elements or elements having identical or similar functions. The embodiments described below with reference to the accompanying drawings are exemplary and are merely intended to explain the present application rather than to be construed as limiting the present application.

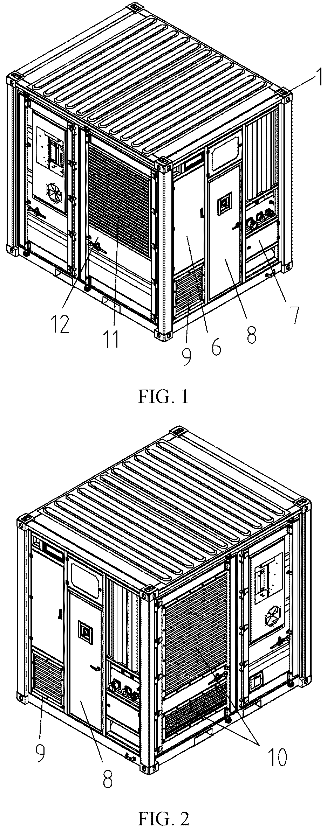

Referring to FIGs. 1 to 4, the present embodiment provides an energy storage apparatus, which includes a box body 1 and a transformer 2 and an energy storage converter 3 arranged in the box body 1.

The box body 1 is internally provided with a first isolation compartment 13 and a second isolation compartment 14 that are independent of each other. The box body 1 is provided with a first air inlet 9 communicating only with the first isolation compartment 13, a second air inlet 10 communicating only with the second isolation compartment 14, and an air outlet 11.

One of the transformer 2 and the energy storage converter 3 is arranged in the first isolation compartment 13, and the other is arranged in the second isolation compartment 14.

The energy storage apparatus of the present embodiment further includes a heat dissipation assembly, which is configured to introduce external cold air through the first air inlet 9 and the second air inlet 10 into the corresponding isolation compartments for heat exchange, and then discharge the air through the air outlet 11.

In the energy storage apparatus provided by the present embodiment, the transformer 2 and the energy storage converter 3 are placed in the separate isolation compartments respectively, and the box body 1 is provided with the air inlets which communicate with the two isolation compartments respectively and the air outlet 11, this enables the transformer 2 and the energy storage converter 3 to dissipate heat independently, not only improving the respective heat dissipation efficiency, but also eliminating the mutual interference between the two during dissipating heat.

In some embodiments, two air outlets 11 may be provided and communicate with the first isolation compartment 13 and the second isolation compartment 14 in one-to-one correspondence. Alternatively, the first isolation compartment 13 and the second isolation compartment 14 share one air outlet 11, which can simplify the structure.

Further, all the air inlets and the air outlet 11 are provided with shutters, thereby ensuring that the box body 1 has good heat dissipation performance and dustproof and waterproof effects.

In some embodiments, the interior of the second isolation compartment 14 is divided into a storage bin 15 and an air ventilation area 16 along a direction of air circulation, and the first isolation compartment 13 is arranged at the bottom of the air ventilation area 16.

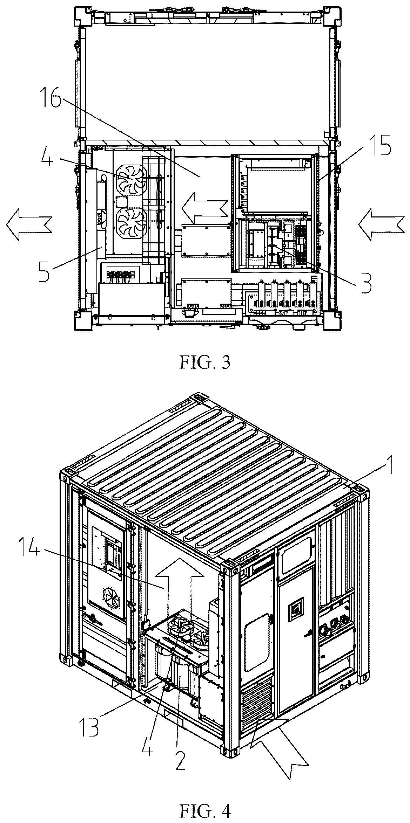

Wherein, the energy storage converter 3 or the transformer 2 can be placed in the storage bin 15. Specifically, as shown in FIGs. 3 and 4, the energy storage converter 3 is placed in the storage bin 15, the transformer 2 is placed in the first isolation compartment 13, and the wall of the first isolation compartment 13 is made of sheet metal, such that the protective performance of the transformer 2 can be enhanced by sheet metal isolation. The positions of the energy storage converter 3 or the transformer 2 may be exchanged by those skilled in the art according to actual design requirements.

Optionally, air permeable structures are respectively arranged on two opposite sidesof the storage bin 15 in the present embodiment, and the remaining sides, the top surface and the bottom surface are all sealed. Cold air entering the second isolation compartment 14 can flow into the storage bin 15 through the air permeable structure on one side surface of the storage bin 15 to exchange heat with the energy storage converter 3, and then discharged into the air ventilation area 16 through the air permeable structure on the other side, and finally is discharged through the air outlet 11. This structure can increase the cooling efficiency of the energy storage converter 3.

Further, the heat dissipation assembly in the present embodiment includes a first heat dissipator 4 and a second heat dissipator 5.The first heat dissipator 4 is configured to introduce external cold air into the first isolation compartment 13 through the first air inlet 9, and the second heat dissipator 5 is configured to introduce the external cold air into the second isolation compartment 14 through the second air inlet 10, achieving independent air intake and increasing the heat exchange efficiency.

Specifically, as shown in FIGs. 3 and 4, the first heat dissipator 4 is configured to introduce external cold air into the first isolation compartment 13 to cool the transformer 2, and the second heat dissipator 5 is configured to introduce the external cold air into the second isolation compartment 14 to cool the energy storage converter 3.

Preferably, the first heat dissipator 4 and the second heat dissipator 5 may be selected from devices capable of sucking the air, such as cooling fans and air conditioners.

Preferably, the first heat dissipator 4 in the present embodiment is arranged at the top of the first isolation compartment 13, and the first heat dissipator 4 can introduce hot air in the first isolation compartment 13 into the air ventilation area 16, and the hot air is discharged through the air outlet 11 along with the hot air coming out of the second isolation compartment 14.

In some embodiments, the first isolation compartment 13 and the second isolation compartment 14 are independent of each other and not communicated with each other, preventing mutual interference between the energy storage converter 3 and the transformer 2 when dissipating heat. Preferably, the walls of the first isolation compartment 13 and the second isolation compartment 14 are provided with thermal insulation layers.

In some embodiments, the first air inlet 9 is arranged on a first sidewall surface of the box body 1, the second air inlet 10 is arranged on a third sidewall surface, adjacent to the first sidewall surface of the box body 1, and the air outlet 11 is arranged on a second sidewall surface, opposite to the third sidewall surface of the box body 1, thereby ensuring the two isolation compartments to achieve air intake through different sidewalls of the box body 1, while the air intake and air exhaust do not interfere with each other.

Optionally, the first isolation compartment 13 is arranged close to the second sidewall surface in the box body 1 and communicates with the first air inlet 9 on the first sidewall surface of the box body 1, and the second isolation compartment 14 is arranged close to the third sidewall surface in the box body 1 and communicates with the second air inlet 10 on the third sidewall surface of the box body 1.

In some embodiments, the energy storage apparatus further includes a control cabinet 6 and an output busbar 7 which are arranged in the box body 1 respectively and located outside the first isolation compartment 13 and the second isolation compartment 14, and the heat dissipation assembly in the box body 1 can dissipate the heat of the control cabinet 6 and the output busbar 7 at the same time. The energy storage apparatus is integrated with energy storage, AC/DC conversion and a control system, achieving clean energy, and reducing carbon emission.

Optionally, the control cabinet 6 and the output busbar 7 are arranged in the air ventilation area 16 in the second isolation compartment 14 respectively without requiring separate heat dissipation, but are isolated from the energy storage converter 3 and the transformer 2, so as to increase the cooling efficiency of the energy storage converter 3 and the transformer 2.

Further, the first sidewall surface of the box body 1 is further provided with an operation port and an output port respectively connected to the control cabinet 6 and the output busbar 7.

Optionally, the first sidewall surface of the box body 1 is further provided with a main door 8, and the operation port and the output port are arranged at two sides of the main door 8 respectively. The layout where operation and output are relatively independent increases the safety for an operator during operation.

In some embodiments, the second sidewall surface of the box body 1 is further provided with a side door 12 which enables the two isolation compartments to be opened and closed at the same time. This structure is compact, and the operator can simultaneously check the heat dissipation of the transformer 2 and the energy storage converter 3 by opening the side door 12.

Optionally, the second heat dissipator 5 is arranged on the side door 12 and located on the inner side of the side door 12. When the side door 12 is closed, the second heat dissipator 5 is located in the second isolation compartment 14, thereby facilitating the installation and maintenance of the second heat dissipator 5.

In some embodiments, both the transformer 2 and the energy storage converter 3 are modular components, and can be detachably arranged in the corresponding isolation compartments. Therefore, the power modularization design of the transformer 2 and the energy storage converter 3 can be realized, and the number of modules may be increased or decreased according to actual requirements, increasing the flexibility of product power and facilitating installation.

In the description of the present specification, the description of reference terms, such as "an embodiment", "some embodiments", "illustrative embodiment", "preferably", "specifically", or "optionally", means that the specific features, structures, materials or characteristics described with reference to the embodiments or examples are included in at least one embodiment or example of the present application. In the present specification, the illustrative description of the aforementioned terms do not necessarily refer to the same embodiment or example. Moreover, the specific features, structures, materials or characteristics described may be combined in any one or more embodiments or examples in an appropriate manner.

Although the embodiments of the present application have been illustrated and described, it can be understood by those of ordinary skill in the art that various changes, modifications, replacements and variations can be made to these embodiments without departing from the principle and purpose of the present application, and the scope of the present application is defined by the claims and equivalents thereof.

## Claims

1. An energy storage apparatus, **characterized in that** the energy storage apparatus comprises:
a box body, internally provided with a first isolation compartment and a second isolation compartment, the box body being provided with a first air inlet communicating only with the first isolation compartment, a second air inlet communicating only with the second isolation compartment, and an air outlet;
a transformer and an energy storage converter, one of the transformer and the energy storage converter being arranged in the first isolation compartment, and the other being arranged in the second isolation compartment; and
a heat dissipation assembly, configured to introduce external cold air through the first air inlet and the second air inlet into the corresponding isolation compartments for heat exchange, and discharge the air through the air outlet.

2. The energy storage apparatus according to claim 1, **characterized in that** the interior of the second isolation compartment is divided into a storage bin and an air ventilation area in sequence along a direction of cold air circulation, wherein the storage bin is configured to store the transformer or the energy storage converter, and the first isolation compartment is arranged at the bottom of the air ventilation area.

3. The energy storage apparatus according to claim 2, **characterized in that** air permeable structures are respectively arranged on two opposite sides of the storage bin, such that cold air entering the second isolation compartment can flow into the storage bin through the air permeable structure on one side of the storage bin for heat exchange, and is then discharged into the air ventilation area through the air permeable structure on the other side of the storage bin.

4. The energy storage apparatus according to claim 2, **characterized in that** the heat dissipation assembly comprises a first heat dissipator and a second heat dissipator, wherein the first heat dissipator is located at the top of the first isolation compartment, the first heat dissipator introduces hot air in the first isolation compartment into the air ventilation area, and the second heat dissipator discharges the hot air in the air ventilation area through the air outlet.

5. The energy storage apparatus according to claim 1, **characterized in that** the first isolation compartment and the second isolation compartment are independent of each other and not communicated with each other, and the heat dissipation assembly comprises a first heat dissipator and a second heat dissipator that are respectively arranged in one-to-one correspondence with the first isolation compartment and the second isolation compartment.

6. The energy storage apparatus according to any of claims 1 to 5, **characterized in that** the first air inlet is arranged on a first sidewall surface of the box body, the second air inlet is arranged on a third sidewall surface of the box body, and the air outlet is arranged on a second sidewall surface, opposite to the third sidewall surface of the box body.

7. The energy storage apparatus according to claim 6, **characterized in that** the first isolation compartment is arranged close to the second sidewall surface and communicates with the first air inlet on the first sidewall surface of the box body, and the second isolation compartment is arranged close to the third sidewall surface and communicates with the second air inlet on the third sidewall surface of the box body.

8. The energy storage apparatus according to claim 6, **characterized in that** the energy storage apparatus further comprises a control cabinet and an output busbar which are arranged in the box body respectively and located outside the first isolation compartment and the second isolation compartment, and the first sidewall surface of the box body is provided with an operation port and an output port respectively connected to the control cabinet and the output busbar.

9. The energy storage apparatus according to claim 8, **characterized in that** the first sidewall surface of the box body is further provided with a main door, and the operation port and the output port are arranged at two sides of the main door respectively.

10. The energy storage apparatus according to claim 6, **characterized in that** the second sidewall surface of the box body is provided with a side door which enables the two isolation compartments to be opened and closed at the same time.

11. The energy storage apparatus according to claim 6, **characterized in that** both the transformer and the energy storage converter are modular components and can be detachably arranged in the corresponding isolation compartments.
